# EUROPEAN PATENT SPECIFICATION

(11) **EP 2 565 050 B1**
(45) Date of publication and mention of the grant of the patent: **17.06.2015**
(21) Application number: 11179733.8
(22) Date of filing: 01.09.2011
(51) Int. Cl.: B60B 21/06, B60B 1/00

(54) **Connection device for spokes**
Verbindungsvorrichtung für Speichen
Dispositif de raccordement de rayons

(43) Date of publication of application: 06.03.2013
(73) Proprietor: Kunshan Henry Metal Technology Co., Ltd., Jiangsu 215300 (CN)
(72) Inventor: Tho, Kee Ping, Kunshan Jiangsu (CN)
(74) Representative: Chaillot, Geneviève

(56) References cited:
- EP-A1- 0 860 301
- EP-A2- 1 375 195
- WO-A1-2005/072989
- WO-A1-2009/081242
- FR-A1- 2 957 299
- US-A- 6 070 948

## Description

The present invention relates to a connection device for a spoke unit, and more particularly, to a connection device having multiple fixing frames on the inside of the rim so as to be easily connected with the spokes.

### BACKGROUND OF THE INVENTION

A conventional bicycle wheel generally includes a rim, a hub at the center of the rim and multiple spokes connected between the rim and the hub. Each of the spokes has the first end fixed to the hub and the second end of each spoke is connected to the rim. A fixing member is locked to the spoke. The conventional bicycle tires include tube-less tires and tube tires, wherein the tube-less tires are easily installed and have less change to be penetrated and flatted. The tube-less tires are welcomed by the uses.

The tube-less tires are installed to the rims which have an inner bridge member, an outer bridge member, and two sidewalls which are connected to two ends of each of the inner and outer bridge members to form an inverted A-shaped cross section. An engaging space is defined between the sidewalls and the outer bridge member and the tire is engaged with the engaging space. The inner bridge members each have multiple holes defined in the inside or the outside thereof, and fixing members are installed to the holes so as to be connected with the heads of the spokes.

For the spokes that to be connected to the holes, there are side holes or central hole provided for the spokes

Taiwan Utility Model Application No. 093109080 discloses a rim having multiple locking members connected thereto so as to be connected with the spokes. The rim has two annular sidewalls and each annular sidewall has a radial inner end. The annular connection ends are connected to the radial inner ends respectively and the annular sidewalls. Each annular connection end has multiple and spaced installation sections, multiple thin sections connected between the installation sections, and holes defined through the installation sections and the thin sections. Each installation section has an engaging hole for being connected with the locking member. Each thin section is inclined and concaved from the inside of the hub and toward the sidewalls of the hub. The engaging holes of the annular connection ends are located alternatively to each other. The thin sections are located alternatively to each other.

Taiwan Utility Model Application No. 095128529 discloses a rim having an engaging space for being connected with the tire, a first sidewall, a second sidewall, a connection plate connected between the first and second sidewalls. Multiple openings are defined in the connection plate. The engaging space is defined by a first annular portion and a second annular portion, and the first and second annular portions define two opposite engaging portions which are connected to the first and second sidewalls. The first and second sidewalls and the connection plate are thinner than the annular portions. A reinforcement resin material is directly attached to the rim and extends from the conjunction area between the first sidewall and the first annular portion to the conjunction area between the second sidewall and the second annular portion, so as to cover the outside of the annular sidewalls, the areas around the openings and the outside of the connection plate.

For the first prior art, the locking heads of the spokes extend through the engaging holes in the installation sections and the side holes defined in the radial inner ends, so as to be connected to the spokes. The second prior art uses the reinforcement resin material directly attached to the rim and extends from the conjunction area between the first sidewall and the first annular portion to the conjunction area between the second sidewall and the second annular portion, and the multiple openings are defined through the central portion of the connection plate so that the spokes extend through the openings.

However, for the first prior art, the engaging holes and side holes have to be drilled in the rim and the locking members are inserted into the side holes so as to be connected with the spokes. However, there is a limited space in the inside of the connection plate so that the locking actions are difficult to proceed. The drilling of the engaging holes and the side holes increases the time required and the efficiency for installation of the rim and spokes. For the second prior art, the openings are also defined first and the washers and spokes are then connected to the openings. The reinforcement resin is then attached to the rim. The steps require a lot of time. The engaging holes, regardless of the positions at the central portion or on two sides, if one of the holes is drilled offset from the desired position, the whole rim has to be given up.

FR2957299 A1 and US6070948 both disclose a rim assembly as defined in the preamble of claim 1.

The present invention intends to provide a connection device for a bicycle rim and improves the shortcomings of the conventional connection devices.

### SUMMARY OF THE INVENTION

The present invention relates to a rim assembly and comprises a rim having a first bridge member, a second bridge member and two sidewalls which are connected to two respective ends of each of the first and second bridge members. An engaging space is defined between the two sidewalls and the first bridge member. Multiple spoke units each have at least one fixing frame, a fixing member and at least one spoke, wherein the at least one fixing frame is connected to the inside of the rim and has a passage which is parallel to the axis of the engaging space. The fixing member is a rod-like member and extends through the passage. The fixing member has at least one positioning hole. The at least one spoke has a first end extending through the fixing member and fixed to the at least one positioning hole. A second end of the at least one spoke is connected to a hub. The fixing member is rotatable and swings relative to the at least one fixing frame to adjust the position for being connected with the spoke.

The primary object of the present invention is to provide a connection device of a rim wherein the rim has multiple fixing frames at the inside thereof and each fixing frame has a fixing member which has a positioning hole to be connected with the spoke. The fixing member and the connection to the spoke are located on the outside of the rim so that it is convenient and easily to proceed.

The second object of the present invention is to provide a connection device of a rim wherein the fixing member has connection member to be connected with the spoke. The surface that the fixing member is matched with the connection member is a curved surface. The fixing member is rotatable and swings relative to the fixing frame to adjust the position for being connected with the spoke.

The third object of the present invention is to provide a connection device of a rim wherein the fixing frame is integrally formed with the rim. The inside of the rim is cut to form the multiple fixing frames, and this is easily manufactured and reduces manufacturing cost.

The fourth object of the present invention is to provide a connection device of a rim wherein the fixing member has a positioning hole or multiple positioning holes so as to be connected with one spoke or multiple spokes.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show a connection device installed to the rim;
Fig. 2 is an exploded view to show a connection device;
Fig. 3 is a cross sectional view of a connection device;
Fig. 4 is another cross sectional view of a connection device;
Fig. 5 is a cross sectional view to show that the fixing member swings relative to the at least one fixing frame;
Fig. 6 is another cross sectional view to show that the fixing member swings relative to the at least one fixing frame;
Fig. 7 is another cross sectional view to show that the fixing member is rotatable relative to the at least one fixing frame;
Fig. 8 is an exploded view to show the connection device of the present invention;
Fig. 9 is a cross sectional view of the connection device of the present invention;
Fig. 10 is an exploded view to show a connection device, and
Fig. 11 is a cross sectional view of a connection device.

### DETAILED DESCRIPTION OF THE PREFERRED EMBODIMENT

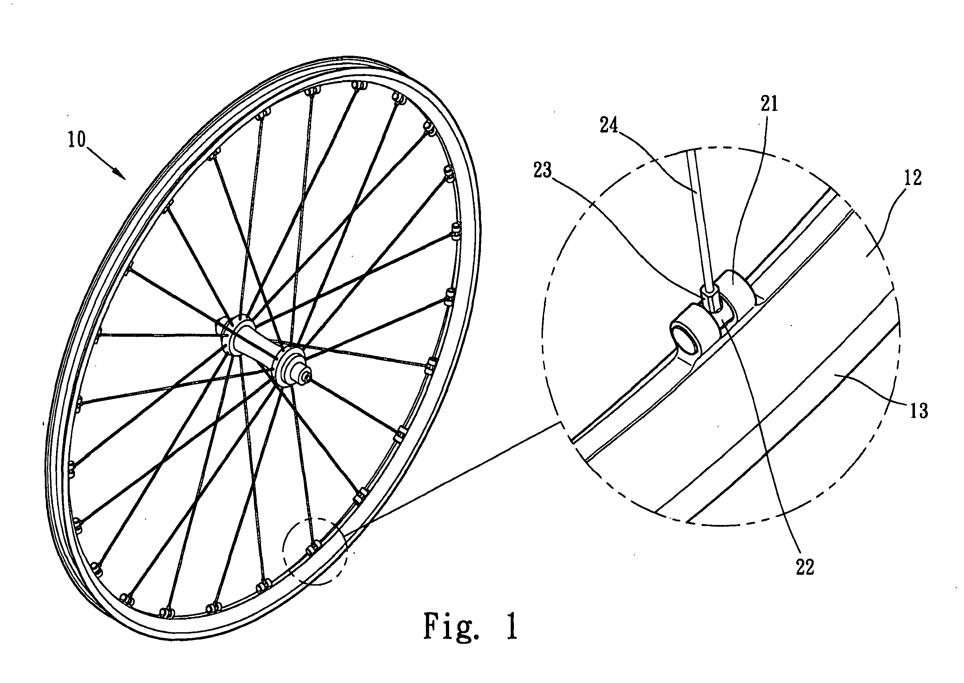

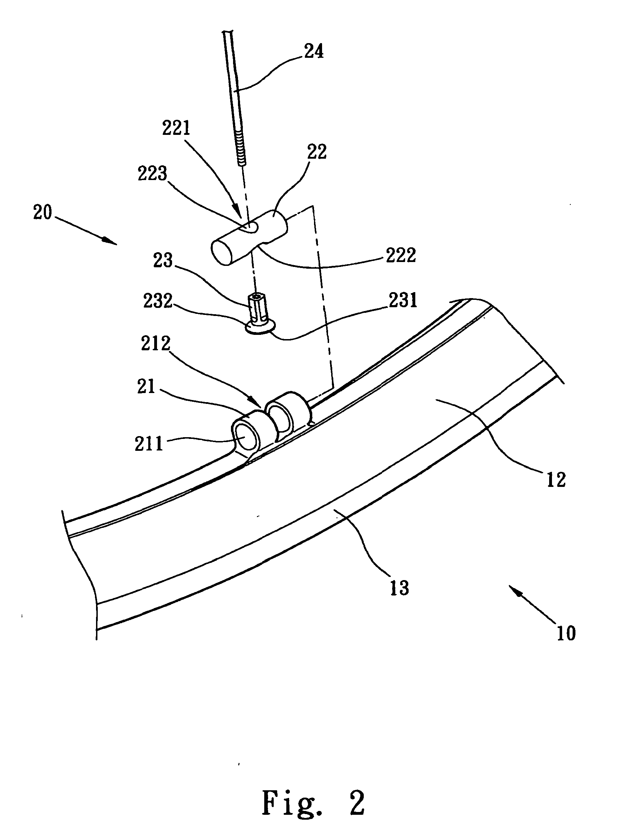

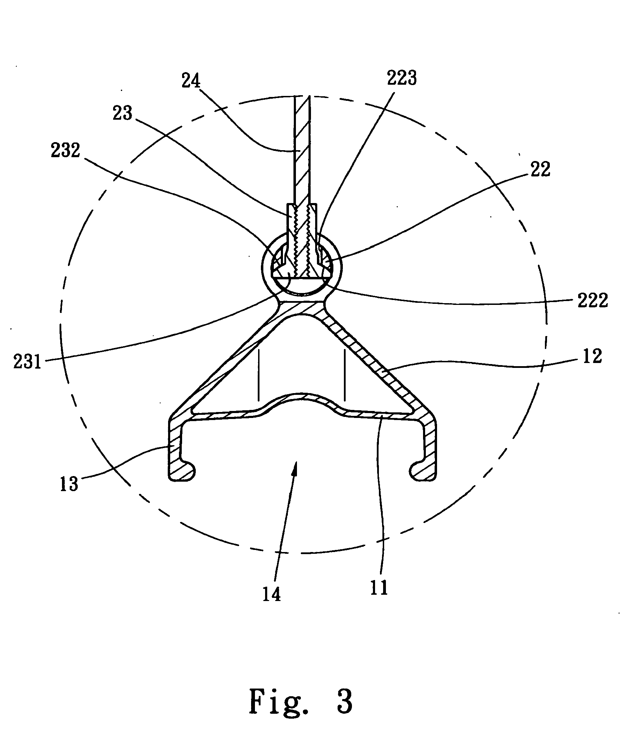

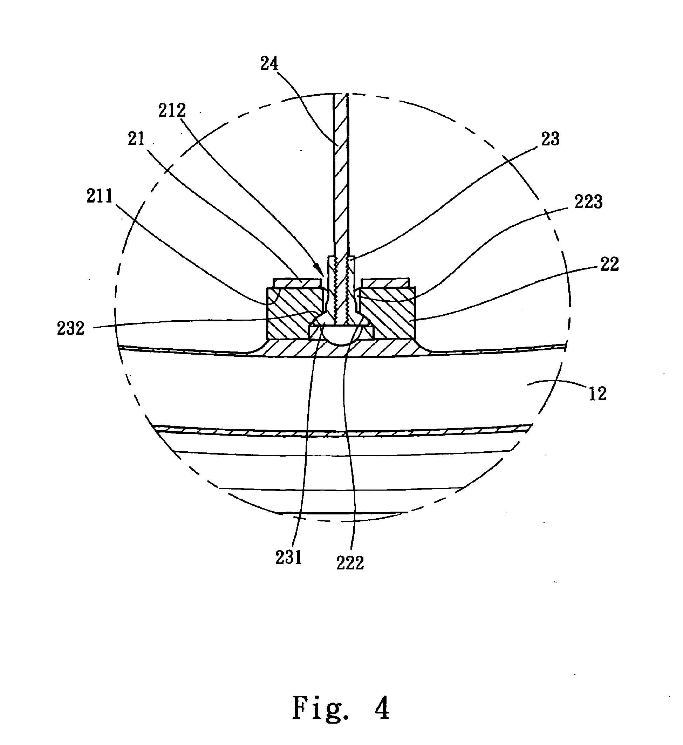

Referring to Figs. 1 to 4, the rim assembly, not being part of the claimed invention comprises a rim 10 and multiple spoke units 20.

The rim 10 is made by metal and in a form an elongate piece, by connecting two ends of the elongate piece to form a circular rim. When viewed the cross section of the rim 10, it comprises a first bridge member 11, a second bridge member 12 and two sidewalls 13 which are connected to two respective ends of each of the first and second bridge members 11, 12 so as to form an inverted A-shaped cross section. An engaging space 14 is defined between the two sidewalls 13 and the first bridge member 11 so as to be connected with a tube-less tire.

Each of the multiple spoke units 20 has at least one fixing frame 21, a fixing member 22 and at least one spoke 24.

The at least one fixing frame 21 is integrally formed with the rim 10 in a form of an annular structure located at the inside of the rim 10. The at least one fixing frame 21 includes multiple tubular fixing frames 21 and each fixing frame 21 includes a passage 211 defined therethrough which is parallel to the axis of the engaging space 14. In this embodiment, not being part of the claimed invention, there are two fixing frames 21 and a hollow portion 212 is defined between the two fixing frames 21.

The fixing member 22 is a rod-like member and extends through the passage 211. The fixing member 22 has a positioning hole 221 and the positioning hole 221 has a first positioning hole 222 and a second positioning hole 223 which communicates with the first positioning hole 222. The inner diameter of the first positioning hole 222 is larger than that of the second positioning hole 223. The inner surface of the first positioning hole 222 is an annular curved and recessed surface. The fixing member 22 extends through the passage 211 and is pivoted relative to the fixing frame 21.

A tubular connection member 23 has a head 231 and a tapered surface 232 is defined between the head 231 and the connection member 23. The tapered surface 232 is shaped to be matched with the shape of the first positioning hole 222. The fixing member 22 is rotatable to position the positioning hole 221 to be located corresponding to the hollow portion 212. The connection member 23 enters into the first positioning hole 222 and extends through the second positioning hole 223 and protrudes out from the fixing member 22. The tapered surface 232 of the head 231 is accommodated in the first positioning hole 222. The connection member 23 is then adjusted rotate the fixing member 22, such that the end remote from the head 231 of the connection member 23 is fixed to the spoke 24. The other end of the spoke 24 is connected to the hub. By the rotatable match between the head 231 of the connection member 23 and the first positioning hole 222 of the fixing member 22, the connection member 23 is rotatable and swings relative to the fixing member 22. By adjusting the fixing member 22 relative to the fixing frame 21, the spoke 24 is adjusted to a desired angular position. Alternatively, the spoke 24 may have the first end thereof extending through the fixing member 22 and fixed to the at least one positioning hole 221. The second end of the spoke 24 has a head which is connected to a hub.

The rim has multiple fixing frames 21 at the inside thereof and each fixing frame 21 has a passage 211 through which the fixing member 22 extends. The fixing member 22 is mounted to the connection member 23 which is fixed to the spoke 24. The fixing member 22 is rotatable relative to the fixing frame 21, and the connection member 23 is rotatable relative to the fixing member 22 so that the spoke 24 can quickly be adjusted to the desired position. The fixing frames 21 are easily manufactured and the fixing member 22 is easily installed so that the assembling steps are easy and efficient.

When in assembling, the fixing member 22 is inserted into the passage 211 of the fixing frame 21 and the connection member 23 extends through the positioning hole 221 of the fixing member 22, and the end remote from the head 21 of the connection member 23 is fixed to the spoke 24.

When in use, the fixing member 22 in the passage 211 is rotated to position the first positioning hole 222 corresponding to the hollow portion 212, and the connection member 23 extends through the first and second positioning holes 222, 223. The head 231 of the connection member 23 is positioned in the first positioning h ole 222 and the connection member 23 is adjusted to rotate the fixing member 22, so that the connection member 23 is adjusted to be conveniently connected to the spoke 24 by the end remote from the head 213. The spoke 24 is then positioned.

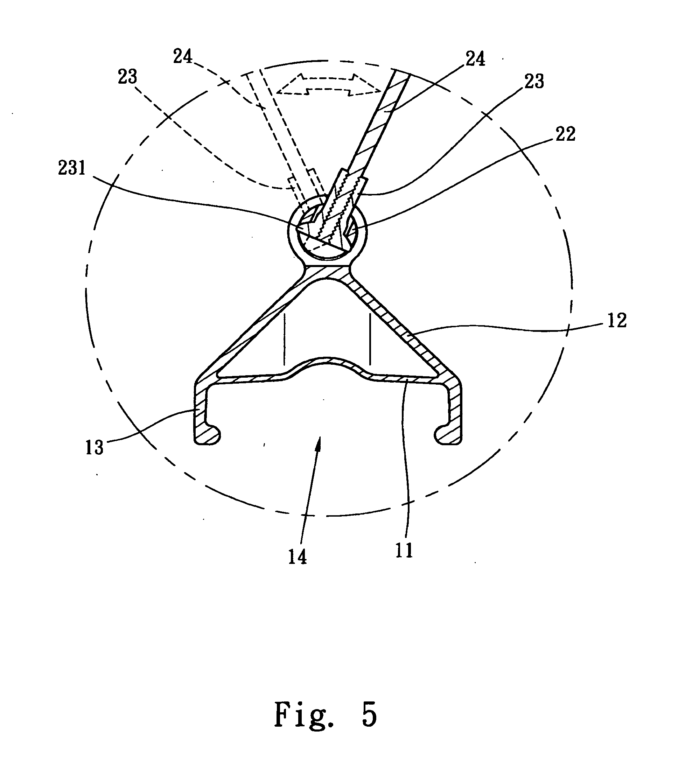

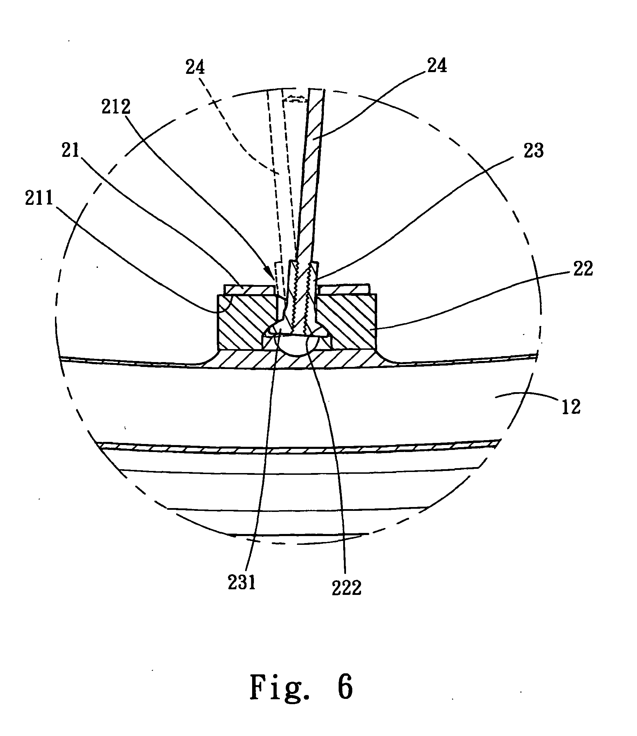

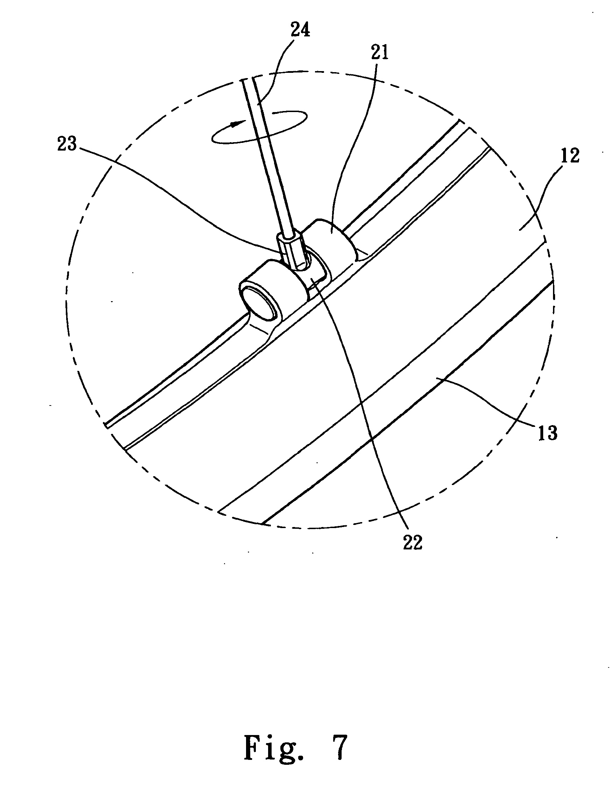

As shown in Figs. 5 to 7, the fixing member 23 is rotatable relative to the fixing frame 21 and the connection member 23 is moved which is swung 360 degrees relative to the fixing member 22, so that the connection member 23 is adjusted to a suitable angular position where the spoke 24 is connected to the connection member 23.

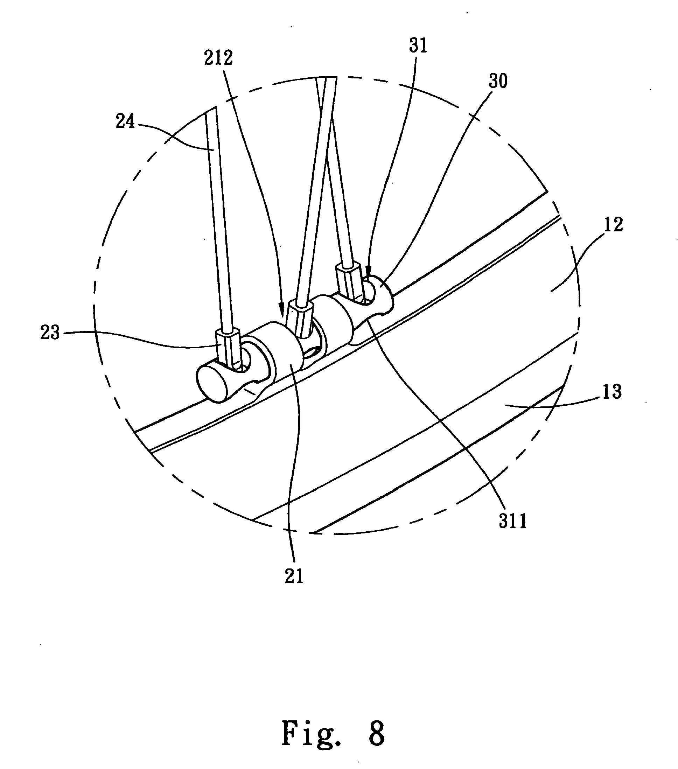

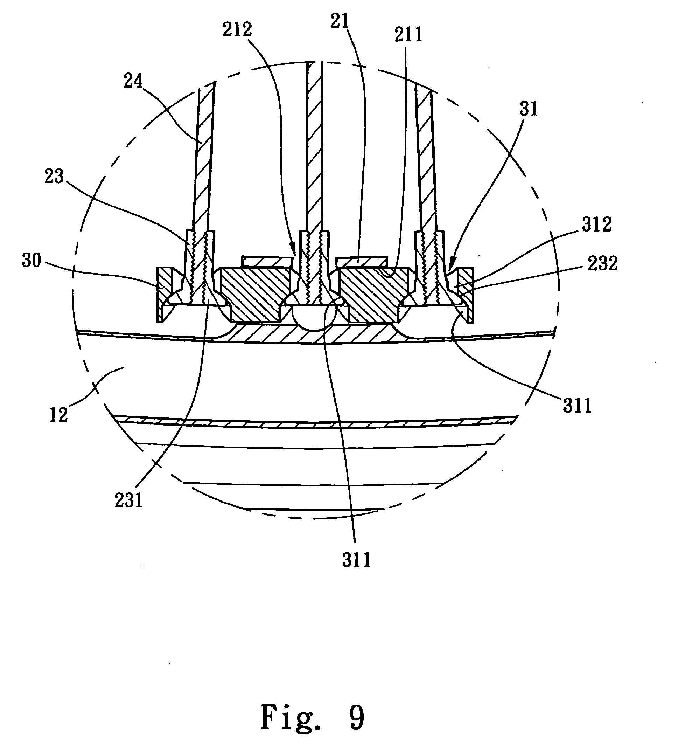

As shown in Figs. 8 and 9 which show the connection device of the present invention, the fixing member 30 is longer than that in the connection device shown in Figures 1 to 7 and three respective positioning holes 31 are defined in the central portion and two ends of the fixing member 30. Each of the positioning holes 31 has a first positioning hole 311 and a second positioning hole 312 which communicates with the first positioning hole 311. The inner diameter of the first positioning hole 311 is larger than that of the second positioning hole 312. The inner surface of the first positioning hole 311 is an annular curved and recessed surface. The fixing member 30 is securely engaged with the passage 211 of the fixing frame 21 so that the positioning hole 31 at the central portion is located corresponding to the hollow portion 212. The positioning holes 31 on two ends protrude out from the two ends of the fixing frame 21. Each positioning hole 31 is connected with a connection member 23 whose head 231 is located in the first positioning hole 311. The head 231 has a tapered surface 231 which is matched with the first positioning hole 311. The other end of the connection member 23 is connected to the spoke 24. Each fixing frame 21 is connected to three spokes 24 at the central portion and the two ends thereof.

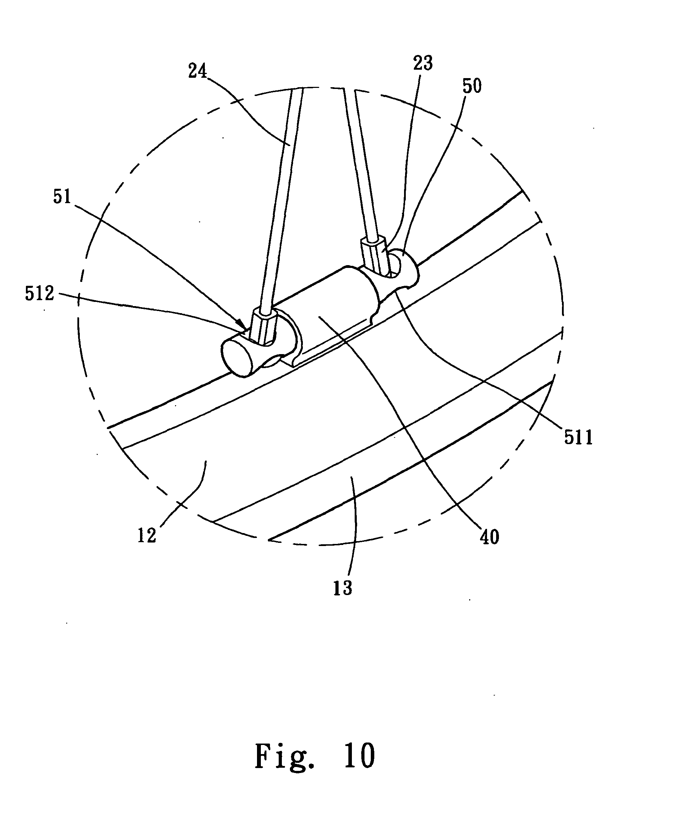

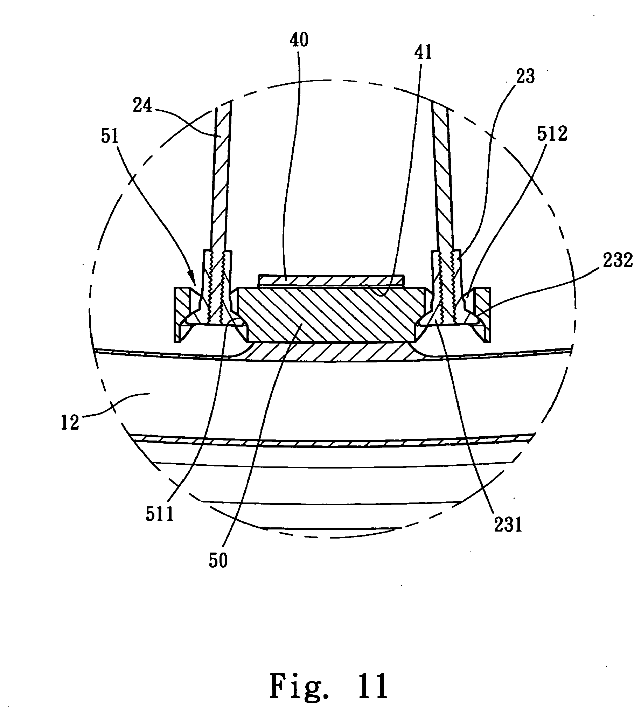

As shown in Figs. 10 and 11, not being part of the claimed invention, the rim 10 includes multiple tubular fixing frames 40 at the inside thereof and each fixing frame 40 has a passage 41 in which a fixing member 50 is located. The fixing member 50 includes two respective positioning holes 51 in two ends thereof. Each of positioning holes 51 has a first positioning hole 511 and a second positioning hole 512 which communicates with the first positioning hole 511. The inner diameter of the first positioning hole 511 is larger than that of the second positioning hole 512. The inner surface of the first positioning hole 511 is an annular curved and recessed surface. The fixing member 50 is securely engaged with the passage 41 of the fixing frame 40 so that the positioning hole 51 at the two ends protrude out from the two ends of the fixing frame 40. Each positioning hole 51 is connected with two connection members 23, wherein the head 231 is located in the first positioning hole 511 corresponding thereto. The head 231 has a tapered surface 232 which is matched with the first positioning hole 511. The other end of the connection member 23 is connected to the spoke 24. Each fixing frame 40 is connected to two spokes 24 at the central portion and the two ends thereof.

The rim 10 includes multiple tubular fixing frames 21 at the inside thereof and each fixing frame 21 has the passage 211 in which the elongate fixing member 22 is located. The fixing member 22 includes two respective positioning holes 221 in two ends thereof and the positioning holes 221 are connected to the spokes 24. The fixing member 22 can be quickly installed to the fixing frame 21 so that the assembly steps for connecting the spokes 24 to the connection members 22 are proceeded at outside of the rim 10, and this is convenient for the assemblers. Besides, the positioning holes 221 are connected with the connection members 23 which are fixed to the spokes 24. The fixing members 22 are rotatable relative to the fixing frames 21, and the curved surfaces between the fixing member 22 and the connection member 23 allow the connection member 23 to swing relative to the fixing member 22. Therefore, the spokes 24 can easily be connected to the connection members 23.

The fixing frames 21 and the rim 10 are integrally formed as a one-piece member and the fixing frames 21 are machined at the inside of the rim 10 at high yield rate and no more drilling actions are required so that the manufacturing cost is lowered. The fixing member 22 includes a positioning hole 221 or multiple positioning holes 221 so that one or more spokes 24 can be connected.

## Claims

1. A rim assembly comprising:
a rim (10) having a first bridge member (11), a second bridge member (12) and two sidewalls (13) which are connected to two respective ends of each of the first and second bridge members (11, 12), an engaging space (14) defined between the two sidewalls (13) and the first bridge member (11);
multiple spoke units (20) each having at least one fixing frame (21), a fixing member (30) and at least one spoke (24), the at least one fixing frame (21) connected to an inside of the rim (10), the at least one fixing frame (21) having a passage (211) which is parallel to an axis of the engaging space (14), the fixing member (30) being a rod-like member and extending through the passage (211), the fixing member (30) having at least one positioning hole (31), the at least one spoke (24) having a first end extending through the fixing member (30) and fixed to the at least one positioning hole (31), a second end of the at least one spoke (24) adapted to be connected to a hub;
**characterized by** the fact that : each spoke unit (20) has a fixing frame including multiple tubular fixing frames (21) and each tubular fixing frame (21) has a hollow portion (212), the fixing member (30) extends through the passage (211) of each tubular fixing frame (21), the at least one positioning hole (31) is located corresponding to the hollow portion (212), the first end of the at least one spoke (24) extends through the hollow portion (212), the fixing member (30) has multiple positioning holes (31), the positioning hole (31) at the center of the fixing member (30) is located corresponding to the hollow portion (212) and the positioning holes (31) in two ends of the fixing member (30) protrude out from the two ends of the fixing frame (21), each of the positioning holes (31) is connected with one of the spokes (24).

2. The rim assembly as claimed in claim 1, wherein the multiple fixing frames (21) are integrally formed with the rim (10) in a form of an annular structure.

3. The rim assembly as claimed in claim 1, wherein the multiple positioning holes (31) are perpendicular to the passage (211).

4. The rim assembly as claimed in claim 1, wherein the at least one spoke (24) includes a head on the second end thereof and the head is adapted to be connected with the hub.

5. The rim assembly as claimed in claim 1 further comprising a tubular connection member (23) which has a head end (231), each positioning hole (31) of the fixing member (30) having a first positioning hole (311) and a second positioning hole (312) which communicates with the first positioning hole (311), an inner diameter of the first positioning hole (311) being larger than that of the second positioning hole (312), the connection member (23) entering into the first positioning hole (311) and extending through the second positioning hole (312) and is connected to the spoke unit (20), the head end (231) being accommodated in the first positioning hole (311).

6. The rim assembly as claimed in claim 5, wherein the first positioning hole (311) has a curved surface which is matched with the head end (231).

## Patentansprüche

1. Felgenanordnung, umfassend:
eine Felge (10) mit einem ersten Brückenelement (11), einem zweiten Brückenelement (12) und zwei Seitenwänden (13), die mit zwei jeweiligen Enden von jedem, dem ersten und zweiten, Brückenelement (11, 12) verbunden sind, wobei ein Eingriffsraum (14) zwischen den beiden Seitenwänden (13) und dem ersten Brückenelement (11) definiert ist;
mehrere Speicheneinheiten (20), wobei jede mindestens einen Befestigungsrahmen (21), ein Befestigungselement (30) und mindestens eine Speiche (24) aufweist, der mindestens eine Befestigungsrahmen (21) mit einer Innenseite der Felge (10) verbunden ist, der mindestens eine Befestigungsrahmen (21) einen Durchgang (211) aufweist, der parallel zu einer Achse des Eingriffsraums (14) verläuft, es sich bei dem Befestigungselement (30) um ein stabähnliches Element handelt, das durch den Durchgang (211) verläuft, das Befestigungselement (30) mindestens ein Positionierungsloch (31) aufweist, die mindestens eine Speiche (24) ein erstes Ende aufweist, das durch das Befestigungselement (30) verläuft und an dem mindestens einen Positionierungsloch (31) befestigt ist, ein zweites Ende der mindestens einen Speiche (24) so ausgelegt ist, dass es mit einer Nabe verbunden wird;
**dadurch gekennzeichnet, dass**: jede Speicheneinheit (20) einen Befestigungsrahmen mit mehreren röhrenförmigen Befestigungsrahmen (21) aufweist und jeder röhrenförmige Befestigungsrahmen (21) einen hohlen Abschnitt (212) aufweist, das Befestigungselement (30) durch den Durchgang (211) jedes röhrenförmigen Befestigungsrahmens (21) verläuft, das mindestens eine Positionierungsloch (31) entsprechend dem hohlen Abschnitt (212) angeordnet ist, das erste Ende der mindestens einen Speiche (24) durch den hohlen Abschnitt (212) verläuft, das Befestigungselement (30) mehrere Positionierungslöcher (31) aufweist, das Positionierungsloch (31) in der Mitte des Befestigungselements (30) entsprechend dem hohlen Abschnitt (212) angeordnet ist und die Positionierungslöcher (31) in zwei Enden des Befestigungselements (30) aus den beiden Enden des Befestigungsrahmens (21) ragen, wobei jedes der Positionierungslöcher (31) mit einer der Speichen (24) verbunden ist.

2. Felgenanordnung nach Anspruch 1, wobei die mehreren Befestigungsrahmen (21) einteilig mit der Felge (10) in Form einer ringförmigen Struktur geformt sind.

3. Felgenanordnung nach Anspruch 1, wobei die mehreren Positionierungslöcher (31) senkrecht zum Durchgang (211) verlaufen.

4. Felgenanordnung nach Anspruch 1, wobei die mindestens eine Speiche (24) einen Kopf am zweiten Ende davon aufweist und der Kopf so ausgelegt ist, dass er mit der Nabe verbunden wird.

5. Felgenanordnung nach Anspruch 1, die ferner ein röhrenförmiges Verbindungselement (23) umfasst, das ein Kopfende (231) aufweist, wobei jedes Positionierungsloch (31) des Befestigungselements (30) ein erstes Positionierungsloch (311) und ein zweites Positionierungsloch (312) aufweist, das mit dem ersten Positionierungsloch (311) in Verbindung steht, ein Innendurchmesser des ersten Positionierungslochs (311) größer als der des zweiten Positionierungslochs (312) ist, das Verbindungselement (23) in dem ersten Positionierungsloch (311) steckt und durch das zweite Positionierungsloch (312) verläuft und mit der Speicheneinheit (20) verbunden ist, das Kopfende (231) in dem ersten Positionierungsloch (311) aufgenommen ist.

6. Felgenanordnung nach Anspruch 5, wobei das erste Positionierungsloch (311) eine gebogene Fläche aufweist, die auf das Kopfende (231) abgestimmt ist.

## Revendications

1. Ensemble jante comprenant :
une jante (10) ayant un premier élément de pont (11), un second élément de pont (12) et deux parois latérales (13) qui sont reliées à deux extrémités respectives de chacun des premier et second éléments de pont (11, 12), un espace de prise (14) défini entre les deux parois latérales (13) et le premier élément de pont (11) ;
de multiples unités de rayon (20) ayant chacune au moins un cadre de fixation (21), un élément de fixation (30) et au moins un rayon (24), l'au moins un cadre de fixation (21) étant relié à l'intérieur de la jante (10), l'au moins un cadre de fixation (21) ayant un passage (211) qui est parallèle à un axe de l'espace de prise (14), l'élément de fixation (30) étant un élément du type tige et s'étendant à travers le passage (211), l'élément de fixation (30) ayant au moins un trou de positionnement (31), l'au moins un rayon (24) ayant une première extrémité s'étendant à travers l'élément de fixation (30) et fixé à l'au moins un trou de positionnement (31), une seconde extrémité de l'au moins un rayon (24) étant conçue pour être reliée à un moyeu ;
**caractérisé par le fait que** : chaque unité de rayon (20) comprend un cadre de fixation ayant de multiples cadres de fixation tubulaires (21), et chaque cadre de fixation tubulaire (21) comprend une partie creuse (212), l'élément de fixation (30) s'étend à travers le passage (211) de chaque cadre de fixation tubulaire (21), l'au moins un trou de positionnement (31) est placé de façon correspondante à la partie creuse (212), la première extrémité de l'au moins un rayon (24) s'étend à travers la partie creuse (212), l'élément de fixation (30) comprend de multiples trous de positionnement (31), le trou de positionnement (31) au centre de l'élément de fixation (30) est placé de façon correspondante à la partie creuse (212), et les trous de positionnement (31) dans deux extrémités de l'élément de fixation (30) font saillie des deux extrémités du cadre de fixation (21), chacun des trous de positionnement (31) est relié à l'un des rayons (24).

2. Ensemble jante selon la revendication 1, dans lequel les multiples cadres de fixation (21) sont formés d'une seule pièce avec la jante (10) sous la forme d'une structure annulaire.

3. Ensemble jante selon la revendication 1, dans lequel les multiples trous de positionnement (31) sont perpendiculaires au passage (211).

4. Ensemble jante selon la revendication 1, dans lequel l'au moins un rayon (24) comprend une tête sur sa seconde extrémité, et la tête est conçue pour être reliée au moyeu.

5. Ensemble jante selon la revendication 1, comprenant en outre un élément de raccordement tubulaire (23) qui a une extrémité de tête (231), chaque trou de positionnement (31) de l'élément de fixation (30) ayant un premier trou de positionnement (311) et un second trou de positionnement (312) qui communique avec le premier trou de positionnement (311), un diamètre intérieur du premier trou de positionnement (311) étant plus grand que celui du second trou de positionnement (312), l'élément de raccordement (23) entrant dans le premier trou de positionnement (311), s'étendant à travers le second trou de positionnement (312) et étant relié à l'unité de rayon (20), l'extrémité de tête (231) étant reçue dans le premier trou de positionnement (311).

6. Ensemble jante selon la revendication 5, dans lequel le premier trou de positionnement (311) a une surface incurvée qui correspond à l'extrémité de tête (231) .
